Europäisches Patentamt

European Patent Office

Office européen des brevets

(19)

(11) **EP 1 728 678 A1**

(12) **DEMANDE DE BREVET EUROPEEN**

(43) Date de publication:
**06.12.2006 Bulletin 2006/49**

(51) Int Cl.:
**B60P 1/58** (2006.01)

(21) Numéro de dépôt: **05352012.8**

(22) Date de dépôt: **03.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **Roussel, Adrien Valery**
**65690 Barbazan Debat (FR)**

(72) Inventeur: **Roussel, Adrien Valery**
**65690 Barbazan Debat (FR)**

Remarques:
Les references aux figures 3,4,5 sont réputées supprimées (règle 43 CBE).

(54) **Benne animée d'un mouvement unidirectionnel pour décharger tout produit stocké a l'intérieur de la benne**

(57) Dispositif pour décharger une benne par mouvement unidirectionnel.

L'invention concerne un dispositif permettant de placer une benne sur des glissières (3) et provoquer un mouvement unidirectionnel pour éjecter par l'arrière le produit placé dans la benne, *selon les effets de l'inertie des corps au repos.*

Le dispositif selon l'invention permet d'adjoindre des appareils complémentaires qui utiliseront l'énergie disponible sur la benne.

Le dispositif selon l'invention est particulièrement destiné à travailler sous les ponts et dans les tunnels, mais peut également remplacer les bennes basculantes ainsi que les différents procédés connus à ce jour.

FIGURE 1

EP 1 728 678 A1

**Description**

La présente invention concerne un dispositif pour décharger tout produit stocké dans une benne de semi-remorque.

A ce jour, trois façons existent pour décharger une benne :

a) *Méthode I :*

on soulève l'avant de la benne pour évacuer le produit par gravitation .mais cette méthode provoque, souvent, des renversements de l'ensemble benne plus tracteur car, au fur et à mesure que l'avant de la benne s'élève, le centre de gravité de la benne s'élève également et la stabilité devient précaire. De plus cette méthode est limitée et ne peut être utilisée sous les ponts, sous les tunnels et en présence des câbles téléphoniques ou électriques.

b) *Méthode II :*

on pousse le produit en utilisant un vérin-poussoir pour éjecter le produit par l'arrière sans lever la benne. Cette dernière méthode est intéressante pour décharger des produits dans des tunnels ou sous des ponts , mais implique une précision de fabrication de la benne qui pose problèmes, après quelques utilisations, car le poussoir doit épouser la forme de la benne et le risque de déformation de la benne (lors des chargements) va provoquer des difficultés de fonctionnement du poussoir.

c) *Méthode III* :

La méthode utilise la vibration provoquée sur une benne placée sur amortisseurs. Le déchargement est réalisé, suivant cette méthode, par vibration oblique ayant une composante verticale qui produit un soulèvement des matériaux et une composante horizontale qui a pour effet de faire avancer ces matériaux vers l'arrière de la benne et à les déverser. Ce brevet, déposé en 1976, ne semble pas avoir eu beaucoup de succès car le problème de déplacement sur route ne semble pas résolu (inertie de l'ensemble benne lors du freinage).

d) *Notre méthode* :

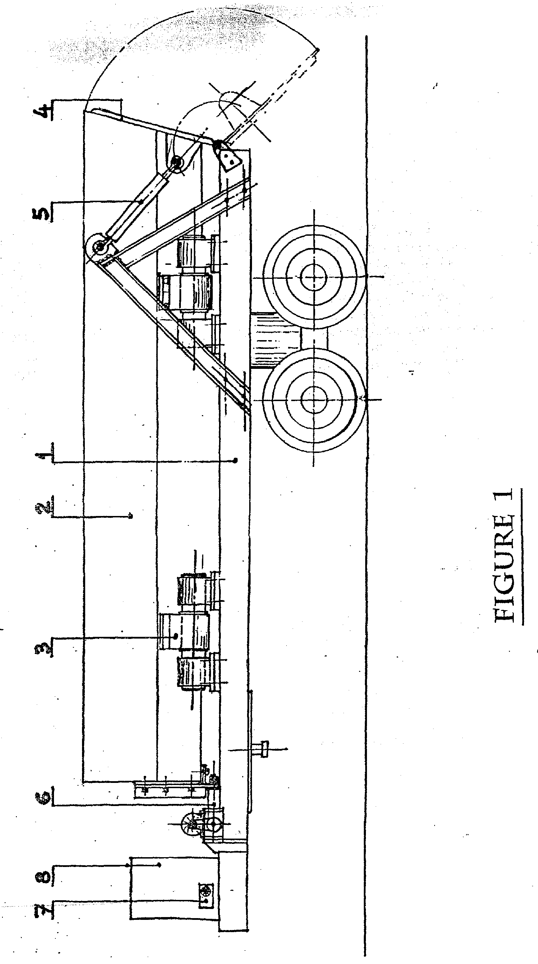

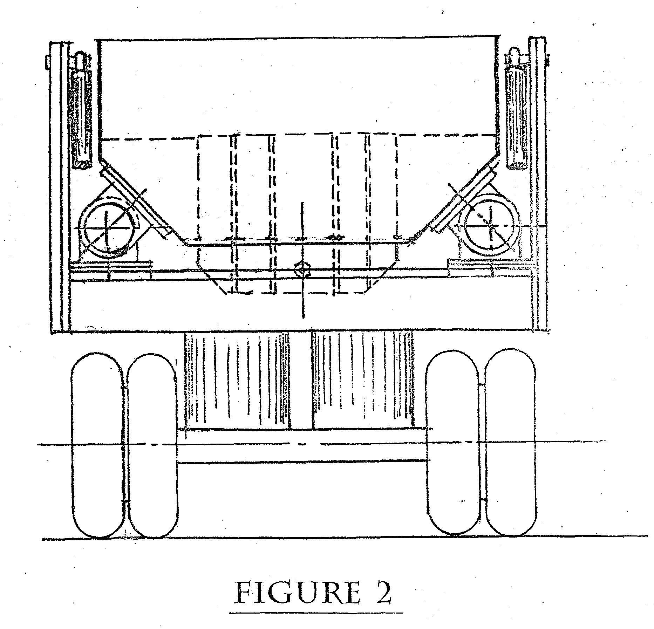

La méthode, objet de notre invention ne se réfère à aucune des méthodes ci-dessus
Notre invention utilise essentiellement *les effets de l'inertie des corps* *au repos*.
Pour appliquer cette méthode, il suffit d'avoir la benne cf.rep.2 montée sur glissières cf. 3 dont une partie est solidaire du châssis cf.rep.1. et l'autre partie est fixée sur la partie inférieure de la benne (voir figures 1 et 2) Ces glissières peuvent être des douilles à billes ou des patins à galets , à rouleaux ou autres. Ces glissières seront réparties sur la longueur du châssis. *La benne ne peut donc être animée que d'un mouvement longitudinal par rapport au châssis.*
La benne peut avoir n'importe quelle forme et pour décharger la benne il faudra animer la benne d'un mouvement unidirectionnel.

*Mouvement unidirectionnel :*

Le mouvement dans un sens est rapide et lent dans l'autre sens. Ce mouvement dit *« unidirectionnel»* va donc provoquer à chaque mouvement une position différentielle de la benne par rapport à la masse du produit situé à l'intérieur de la benne, selon les *effets de l'inertie des corps au repos.* Ce mouvement est provoqué par l'appareil cf. rep.6 monté rigide sur le châssis cf.rep.1.et attelé à la benne cf.rep.2 (voir figures 3, 4, 5).

Selon notre invention, nous avons prévu, entre autres caractéristiques un déplacement unidirectionnel de l'ordre de 20 mm minimum et une vitesse de rotation de la came cf.rep.4 (figures 3 et 4) de 500 t/min. Ces deux paramètres permettraient de décharger une benne de 7,50 mètres en :

$$7500 \text{ mm} / (20 \text{ mm} \times 500.t / \text{min})\ldots\ldots\ldots = 0,75 \text{ minute.} = 45 \text{ secondes}$$

Cette performance permet de concurrencer les différents systèmes existants actuellement sur le marché.

Il est possible d'utiliser d'autres composants pour obtenir le mouvement unidirectionnel soit par système hydraulique, soit par système pneumatique.

Le système électrique cf.rep.6 que nous avons étudié et dessiné est très simple d'utilisation et de maintenance moins onéreuse que tout autre procédé.

Un groupe électrogène cf. rep.8 embarqué dépouillé au maximum (à démarrage manuel par exemple et simple capotage, ou insonorisé) fournit l'énergie pour ouvrir et fermer la porte arrière cf.rep.4 par l'intermédiaire de deux vérins électriques cf.rep.5 équipés de limiteurs de couple et mettre en fonctionnement l'appareil à mouvement unidirectionnel pour évacuer les différents produits situés à l'intérieur de la benne.

Un variateur électronique cf.rep.7 complète l'équipement et permet de réguler la vitesse de l'appareil cf.rep.6 de façon à doser la sortie du produit à décharger.

De plus l'énergie du groupe électrogène peut alimenter des outils auxiliaires (marteau piqueur, tronçonneuse à béton, perceuse, etc...)

Le tracteur est donc banalisé et peut être remplacé à tout moment car la benne devient autonome. (le groupe électrogène sera équipé de deux ou trois prises triphasées et aussi monophasées pour éventuellement éclairer le site, par exemple).

L'ordre séquentiel de manoeuvre est le suivant :

1°) mise en fonctionnement du groupe électrogène cf.rep.8,
2°) ouverture de la porte arrière cf.rep.4 par manoeuvre des deux vérins cf.rep.5,
3°) mise en fonctionnement de l'appareil cf.rep.6 délivrant le mouvement unidirectionnel en jouant sur le variateur de fréquence cf.rep.7 pour effectuer un déchargement régulé.

Après déchargement,

4°) arrêt de l'appareil délivrant le mouvement unidirectionnel cf.rep.6,
5°) fermeture de la porte arrière cf.rep.4 en utilisant les deux vérins cf.rep.5,
6°) arrêt du groupe électrogène cf.rep.8.

## Revendications

1. Dispositif pour décharger tout produit stocké dans une benne cf. rep.2 de semi-remorque en utilisant un appareil cf.rep.6 permettant d'obtenir un mouvement unidirectionnel Cette benne est montée sur glissières cf. rep.3 et ne peut être animée que d'un mouvement longitudinal par rapport au châssis cf.rep.1.

2. Dispositif selon la revendication 1, **caractérisé par** la forme quelconque de la benne cf.rep.2

3. Dispositif selon la revendication 1 ou la revendication 2, **caractérisé par** l'appareil cf.rep.6 délivrant le mouvement unidirectionnel, permettant grâce à un variateur électronique cf.rep.7 de faire varier la vitesse du moteur de commande du mouvement unidirectionnel. Ce variateur assure le dosage du déchargement des produits stockés à l'intérieur de la benne.

4. Dispositif selon la revendication 3 **caractérisé par** le blocage de la porte sur l'arrière de la benne.

5. Dispositif selon l'une quelconque des revendications précédentes caractérisé en ce qui concerne l'énergie utilisée, pour les différents mouvements soit unidirectionnels soit d'ouverture ou fermeture de porte, est fournie par un groupe électrogène cf. rep.7 embarqué sur la benne.

6. Dispositif selon l'une quelconque des revendications précédentes **caractérisé par** l'utilisation d'un tracteur quelconque, non spécialisé pour être attelé à cette benne, entièrement autonome.

EP 1 728 678 A1

## FIGURE 2

**Office européen des brevets**

**RAPPORT DE RECHERCHE EUROPEENNE**

Numéro de la demande

EP 05 35 2012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 33 19 074 A1 (STRAUB,FRITZ) 29 novembre 1984 (1984-11-29) * page 6, ligne 19 - page 7, ligne 19 * * page 8, ligne 16 - ligne 26 * * page 9, ligne 18 - ligne 26 * * page 10, ligne 13 - ligne 15 * * page 12, ligne 14 - ligne 22; figures * * revendications * | 1-3 | B60P1/58 |
| Y | ----- | 4-6 | |
| Y | US 2 500 293 A (O'CONNOR JOHN C) 14 mars 1950 (1950-03-14) * colonne 2, ligne 47 - ligne 75 * * colonne 4, ligne 60 - colonne 5, ligne 4 * * colonne 5, ligne 23 - ligne 25; figures * | 4-6 | |
| A | ----- DE 19 34 711 A1 (KISHASEIZO KABUSHIKI KAISHA) 18 février 1971 (1971-02-18) * page 10, ligne 6 - page 11, ligne 36; figures 8-13 * ----- | 1-6 | |
| A | US 4 793 468 A (HAMILTON ET AL) 27 décembre 1988 (1988-12-27) ----- | | |

DOMAINES TECHNIQUES RECHERCHES (Int.Cl.7)

B60P

Le présent rapport a été établi pour toutes les revendications

| Lieu de la recherche | Date d'achèvement de la recherche | Examinateur |
|---|---|---|
| La Haye | 6 octobre 2005 | Nordlund, J |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 35 2012

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-10-2005

| Document brevet cité au rapport de recherche | | Date de publication | Membre(s) de la famille de brevet(s) | | Date de publication |
|---|---|---|---|---|---|
| DE 3319074 | A1 | 29-11-1984 | AUCUN | | |
| US 2500293 | A | 14-03-1950 | AUCUN | | |
| DE 1934711 | A1 | 18-02-1971 | AUCUN | | |
| US 4793468 | A | 27-12-1988 | EP | 0289573 A1 | 09-11-1988 |
| | | | WO | 8803113 A1 | 05-05-1988 |

EPO FORM P0460

Pour tout renseignement concernant cette annexe : voir Journal Officiel de l'Office européen des brevets, No.12/82